**Europäisches Patentamt**

**European Patent Office**

**Office européen des brevets**

(19)

(11) **EP 1 108 465 A2**

(12) **EUROPÄISCHE PATENTANMELDUNG**

(43) Veröffentlichungstag:
**20.06.2001 Patentblatt 2001/25**

(51) Int Cl.⁷: **B01J 2/00**, B01J 27/04,
B01J 2/16

(21) Anmeldenummer: **00125279.0**

(22) Anmeldetag: **18.11.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **10.12.1999 DE 19959668**

(71) Anmelder: **Degussa AG**
**40474 Düsseldorf (DE)**

(72) Erfinder:
• **Bachmann, Bernd, Dr.**
**63571 Gelnhausen (DE)**

• **Dartsch, Tobias**
**22085 Hamburg (DE)**
• **Hasseberg, Hans Albrecht, Dr.**
**63584 Gründau-Lieblos (DE)**
• **Körfer, Martin**
**63894 Glattbach (DE)**
• **Pfaff, Gerald**
**63517 Rodenbach (DE)**
• **Rohland, Lutz**
**63065 Offenbach (DE)**
• **Schultheiss, Friedel**
**63594 Hasselroth (DE)**

(54) **Rieselfähige Nicotinsäureamid-haltige Formlinge und Verfahren zu deren Herstellung**

(57) Verfahren zur Herstellung von Nicotinsäureamid-haltigen Formlingen durch Vertropfen von schmelzflüssigem Nicotinsäureamid mittels laminaren Strahlzerfalls in einem Fallturm und Abkühlen der schmelzförmigen Tropfen durch Wärmetausch bis erstarrte kugelförmige Partikel gebildet werden.

**EP 1 108 465 A2**

## Beschreibung

Die Erfindung betrifft rieselfähige Nicotinsäureamid-haltige Formlinge und ein Verfahren zur Herstellung von rieselfähigen, staubarmen Nicotinsäureamid-Formlingen ausgehend von einer Schmelze von Nicotinsäureamid (NSA) mit einem Wassergehalt von bis zu 5 Gewichts-% durch Vertropfung in einem Fallturm sowie die Erstarrung und Abkühlung der Tropfen.

Die Bereitstellung der Schmelze kann auf verschiedenen Wegen erfolgen. So ist es möglich, ein z. B. gemäß US 2 471 518, GB 777 517, DE-PS 828 247 oder DE-PS 2 131 813 erzeugtes, trockenes und festes Produkt unabhängig vom Standort dieser Produktion zur weiteren Verwendung aufzuschmelzen und entsprechend der vorliegenden Erfindung zu verwenden. Vorteilhaft ist es, eine gemäß DE OS 25 17 053 und DE-PS 25 17 054 hergestellte Schmelze von NSA mit nur geringen Anteilen an Verunreinigungen direkt gemäß der vorliegenden Erfindung weiter zu verarbeiten. Diese besonders bevorzugte Variante ist in der Durchführung erheblich einfacher und unter energetischen Gesichtspunkten überlegen. Je nach Herkunft der Schmelze kann dieselbe, bedingt durch den Herstellungsprozeß, neben Wasser noch Verunreinigungen organischer oder anorganischer Art beinhalten. Die vorliegende Erfindung findet Anwendung auf Schmelzen, deren Gehalt an NSA einen Wert von 90 Gew.-% übersteigt.

Die im Handel befindlichen Produkte haben eine hohe Reinheit von teilweise über 98% und werden als Feststoffe vertrieben. Für die Verwendung in Futtermischungen eignet sich aufgrund des Entmischungsverhaltens eine Korngrößenverteilung von 50 - 1000µm. Nach der DE-OS 25 17 053 wird das Nicotinsäureamid aus der Schmelze durch flächiges Erstarren auf einem gekühlten Kristallisationsband und Einstellung des gewünschten Kornspektrums durch Methoden der mechanischen Verfahrenstechnik mittels Zerteilen, Vermahlen und Sieben gewonnen. Das Erstarren auf einem gekühlten Kristallisationsband nach der DE-PS 25 17 054 kann auch nach einer vorausgehenden Zerteilung der schmelzflüssigen Phase, zum Beispiel durch Zerstäuben oder Abtropfen, vorgenommen werden. Das auf diese Weise gewonnene Nicotinsäureamid zeigt allerdings in der Handhabung Nachteile, da es bei längerem Lagern verklumpen kann.

Aufgabe der Erfindung ist es, ein Verfahren zur Verfügung zu stellen, das von schmelzflüssig vorliegendem Nicotinsäureamid ausgehend zu staubfreien, gut rieselfähigen, kugelförmigen Formlingen führt.

Die Herstellung der Schmelze von Nicotinsäureamid erfolgt in bekannter Weise durch katalytische Umsetzung von β-Picolin mit Luftsauerstoff und Ammoniak. Unter Wasserabspaltung wird in der Gasphase am heterogenen Festbettkatalysator als Hauptprodukt Nicotinsäurenitril erhalten. Nebenprodukte und nicht umgesetzte Ausgangsstoffe werden im Aufarbeitungsteil abgetrennt, isoliert und rückgeführt. Das reine Nitril wird zum Beispiel gemäß DE-OS 25 17 053 und DE-PS 25 17 054 unter NaOH - Katalyse zum Amid verseift und dieses schließlich vom Lösemittel befreit und dabei in den schmelzflüssigen Zustand überführt.

Gegenstand der Erfindung sind rieselfähige

Nicotinsäureamid-haltige Formlinge und ein Verfahren zu deren Herstellung weitestgehend kugelförmiger Partikel aus der in bekannter Weise erzeugten Schmelze von Nicotinsäureamid, gekennzeichnet dadurch, daß die Zerteilung des Produktes durch Glattstrahldüsen oder Bohrungen ähnlicher Geometrie in der schmelzflüssigen Phase und die Erstarrung und Abkühlung der Partikel durch direkten Wärmetausch mit einer Gasströmung in einem Fallturm vorgenommen wird.

Der Vorteil des Verfahrens liegt darin, daß in einem einzigen Apparat aus der Schmelze Formlinge der gewünschten Abmessungen ohne Staubanteil sowie in kugelförmiger Gestalt und damit hervorragend rieselfähig hergestellt werden können.

Die Zerteilung der Flüssigphase erfolgt bei Wassergehalten von 0 bis 5 Gewichts-%, bevorzugt 0 bis 0,5%, besonders bevorzugt 0 bis 0,1% und Temperaturen oberhalb der Schmelztemperatur bis 250°C, insbesondere 130 bis 170°C. Es können dabei Bohrungen der Durchmesser 50 bis 300µm und Vordrücke von 0,1 bis 20 bar zur Strahlerzeugung verwendet werden. Die zylindrische Bohrung ist auf der Einlaufseite bevorzugt mit einer strömungsgünstigen Einlaufstrecke versehen. Die Richtung der Bohrungslängsachse ist hierbei beliebig, bevorzugt wird sie parallel zum Schwerefeld der Erde nach unten oder in einem Winkel von 10 - 60°, insbesondere 20 - 40°, zur Senkrechten nach oben ausgerichtet. Die Strahlen zerfallen durch Instabilitäten auf dem Wege des Zerwellens oder bevorzugt durch laminaren Strahlzerfall.

Eine besonders vorteilhafte Variante dieser Erfindung besteht darin, die zur Tropfenerzeugung eingesetzten Düsen, Düsenplatten, die zur Aufnahme derselben vorgesehenen Körper oder aber die Schmelze selbst mit Schwingungsenergie im Frequenzbereich 100 Hz bis 1 MHz, bevorzugt 1 kHz bis 30 kHz, anzuregen und hierzu schwingfähige Systeme auf der Basis einer Wechselwirkung von magnetischem und elektrischem Feld oder aber solche, die auf der Ausnutzung des piezoelektrischen Effektes beruhen, einzusetzen. Durch diese Anregung kann ein Tropfenspektrum mit besonders enger Größenverteilung erhalten werden.

Den so erhaltenen Schmelzetropfen wird in direktem Wärmetausch mit einem Gasstrom Wärme entzogen, bis sie erstarrt und/oder abgekühlt sind. Es kann zum Beispiel flüssiger Stickstoff als Gas zur Kühlung zugeführt werden.

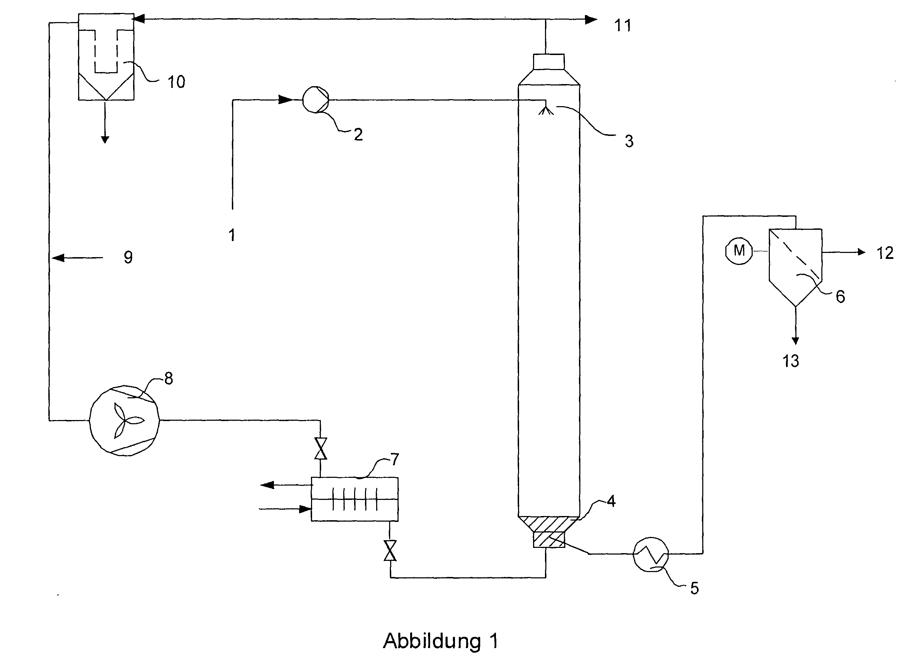

Wahlweise kann die Kühlung auch indirekt an Kühl- oder Kaltwasser in einem außenliegenden Wärmeübertrager erfolgen (siehe Abbildung 1(7)). Führt man Gas und Schmelzetropfen im Gleichstrom, so läßt sich die Erstarrung gegenüber dem Gegenstrombetrieb beschleunigen.

In einer weiteren Verfahrensvariante wird das Gas im Gegenstrom zu den Tropfen geführt und die mindestens äußerlich erstarrten Tropfen werden am Boden des Fallturms in einer Wirbelschicht aufgefangen, welche von demselben Gasstrom fluidisiert wird. Die Wirbelschichtpartikel sind bevorzugt dieselben Partikel wie die erzeugten. Da in der Wirbelschicht Verweilzeit zur vollständigen Erstarrung und Abkühlung zur Verfügung gestellt wird, kann die Fallhöhe reduziert werden. Das Gas wird im Kreis geführt und in indirektem Wärmetausch gegen Kaltwasser oder Kühlsole gekühlt. Bei dieser besonders bevorzugten Variante werden Massenverhältnisse von Gasstrom zu Schmelzestrom von 40:1 bis 80:1 eingestellt.

Ferner besteht die Möglichkeit, die mindestens äußerlich erstarrten Tropfen in einem liegenden Wirbelschichtapparat aufzufangen, der in verschiedene Zonen unterteilt ist und in diesen die Durchführung einer Nachtrocknung und/oder Kühlung gestattet. Die erzeugten Partikel werden ausgetragen, sobald sie ihre Endfestigkeit erreicht haben, und gegebenenfalls über einen Kühler (siehe Abbildung 1 (5)) geleitet, gesiebt und abgepackt.

Die Formlinge sind annähernd sphärisch und besitzen eine Schüttdichte > 750 kg/m$^3$, bevorzugt > 800 kg/m$^3$, bei einer Korngrößenverteilung zwischen 50 bis 1000μm, bevorzugt 150 bis 700μm, besonders bevorzugt 200 bis 600μm. Der Anteil mit einer Korngröße < 100 μm liegt im allgemeinen bei maximal 0,5%, bevorzugt < 0,2%.

Während nicht vertropftes Nicotinsäureamid aufgrund seiner stark hygroskopischen Eigenschaften verklumpen und seine Rieselfähigkeit verlieren kann, findet man diese Eigenschaften bei den erfindungsgemäßen Formlingen nicht.

Durch bestimmte Zuschlagstoffe wird eine weitere Verbesserung der Nicotinamid-haltigen Formlinge beziehungsweise eine gezielte Modifikation ihrer Eigenschaften erreicht. Bevorzugt zu nennen sind hierbei Citronensäure/Monohydrat, ortho-Phosphorsäure, Magnesiumstearat, Palmitinsäure, Dextrin, Methacrylatharz (Degalan LP), Celluloseacetat, Ethylcellulose und Saccharose oder Gemische dieser Stoffe. So wurde beispielsweise gefunden, daß Citronensäure und Phosphorsäure einen positiven Einfluß auf die handhabungstechnischen Eigenschaften der damit behandelten Nicotinamidprodukte ausüben. Dieser Effekt tritt bevorzugt bei Konzentrationen zwischen 0,01 und 5 Gew.-%, insbesondere bei Konzentrationen von ca. 1 Gew.-% Zuschlagstoff bezogen auf das Nicotinamid auf.

Die geringe Konzentration ist vorteilhaft, weil ein möglichst hoher Wirkstoffgehalt erwünscht ist. Die hier genannten Zuschlagstoffe sind zudem von einer gewissen nutritiven Wirksamkeit, was neben der Verbesserung der Eigenschaften einen zusätzlichen Wertstoffeintrag in die entsprechenden Futterformulierungen bedeutet und somit einen weiteren Vorteil darstellt.

Der Vergleich der Verklumpungsneigungen und der Schüttwinkel als Maß für die Rieselfähigkeit zeigt eine deutliche Verbesserung der Nicotinamid-Formlinge im Vergleich zum herkömmlichen amorphen Nicotinamid an, wie Beispiel 5 zeigt. Den im Vergleich höchsten Schüttwinkel von 39° zeigt herkömmliches Nicotinamid. Die niedrigsten Schüttwinkel von 20 bzw. 22° und damit die beste Fließfähigkeit zeigen die unbehandelten, sowie die mit Citronensäure-monohydrat behandelte Nicotinamid-Formlinge (Tabelle 2)

Die höchste Verklumpungsneigung, ausgedrückt als Gewicht im Druckstempeltest, von 7,2 kg unter Klimastressbedingungen beziehungsweise 4,0 kg unter Normalbedingungen zeigt das unbehandelte herkömmliche Nicotinamid (Tabelle 2).

Die niedrigsten Verklumpungswerte von 0,9 kg beziehungsweise 1,2 kg zeigten unter Klimastressbedingungen die mit Citronensäure-Monohydrat behandelten sowie die unbehandelten Nicotinamid-Formlinge. Unter Normalbedingungen erwiesen sich das mit ortho-Phosphorsäure behandelte Material mit nur 0,5 kg, sowie die unbehandelten Nicotinamid-Formlinge mit 0,6 kg am günstigsten im Vergleich zu herkömmlicher Ware.

Die qualitative Beurteilung (Tabelle 3) zeigt einen weiteren vorteilhaften Effekt der Zuschlagstoffe.

Während unbehandelte Nicotinamid-haltige Formlinge eine Tendenz zu elektrostatischer Aufladung bei direktem Kontakt mit Kunststoffverpackungen aufweisen, die sich qualitativ durch eine gewisse Haftung an Kunststoffoberflächen bemerkbar macht, weisen das mit ortho-Phosphorsäure beziehungsweise wasserfreier Citronensäure behandelte Material keinerlei Oberflächenhaftung auf. Auf diese Weise werden Nicotinamid-haltige Formlinge zur Verfügung gestellt, deren handhabungstechnische Eigenschaften bezüglich üblicher Kunststoffverpackungsstoffe deutlich verbessert sind.

Die Zuschlagstoffe können sowohl der Nicotinamidschmelze vor dem Konfektionierungsschritt als auch dem Nicotinamidendprodukt zugefügt werden. Dies kann sowohl in Form der Reinstoffe als auch in Form einer Suspension oder Lösung in einem geeigneten Lösemittel geschehen.

Ein Aufbringen auf die bereits gebildeten Nicotinamid-haltigen Formlinge erfolgt bevorzugt direkt durch Einbringen in konzentrierter oder verdünnter Form in die Wirbelschicht, wodurch ein zusätzlicher Konfektionierungsschritt eingespart werden kann. Außerdem kann beim Einbringen in die Wirbelschicht mit geringeren Anteilen an Zuschlagstoffen gearbeitet werden, die im Bereich 0,05 bis 2,5 % liegen im Vergleich zu bevorzugten 0,05% bis 5% beim Einbringen in die Schmelze.

Wie Vergleichsbeispiel 6 zeigt, wirken sich Zuschlagsstoffe auch bei herkömmlicher amorpher Nicotinamidqualität mindernd auf die Verklumpungsneigung unter Klimastress aus. Die Rieselfähigkeit, abgeleitet vom Schüttwinkel, wird dadurch tendenziell verschlechtert (Tabelle 5). Dies läßt den Einsatz von Zuschlagsstoffen bei Nicotinamidhaltigen Formlingen als besonders vorteilhaft erscheinen.

Durch die Erfindung wird ein Nicotinamidprodukt zur Verfügung gestellt, das hinsichtlich der bisher verfügbaren Qualitäten deutliche Vorteile aufweist, insbesondere eine verbesserte Rieselfähigkeit, eine geringere Verklumpungsneigung sowie stabilere handhabungstechnische Eigenschaften.

Beispiele

Beispiel 1

Durch eine Lochplatte mit einem Bohrungsdurchmesser von 200 μm wird NSA-Schmelze einer Temperatur von 145°C mit einem Vordruck von 0,4 barü senkrecht nach unten vertropft. Es stellt sich ein Massenstrom von 0,7 kg/ h ein. Die Tropfen werden in flüssigem Stickstoff aufgefangen, erstarrt und abgekühlt. Man findet durch Siebung, daß ein Massenanteil von 55 % größer als 710 μm, ein Anteil von 44 % größer als 355 μm und ein Anteil von 1 % größer als 125 μm ist. Das erhaltene Produkt ist kugelförmig und exzellent rieselfähig.

Beispiel 2

Durch eine Glattstrahldüse mit einem Bohrungsdurchmesser von 200 μm und einem Vordruck von 4,0 barü wird ein schmelzflüssiger NSA-Strahl erzeugt. Diese Schmelze hat eine Austrittstemperatur von 160°C. Der Strahl ist unter einem Winkel von 60° zur Waagerechten aufwärts gerichtet, er zerfällt am Scheitelpunkt zu Tropfen, welche durch Luft im Gegenstrom in einem Fallturm gekühlt werden. Die Fallhöhe beträgt 13 Meter. Aus der Wirbelschicht am unteren Ende des Fallturmes trägt man das Produkt nach Ende des Batchversuches aus.

Bei einer Gesamtmenge von 5,5 kg sind

348 g im Größenbereich 125 μm - 355 μm

1079 g im Größenbereich 355 μm - 710 μm

3468 g im Größenbereich 710 μm - 1000 μm

640 g im Größenbereich 1000 μm - 1250 μm

Das Produkt ist überwiegend kugelförmig, mit leichten Abplattungen, und ebenfalls sehr gut rieselfähig.

Beispiel 3

In einer kontinuierlich betriebenen Anlage ohne Luftkreislauf, in welcher man eine Aufstromgeschwindigkeit von 0,33 m/ s im Fallturm realisiert, wird eine NSA-Schmelze von 170°C mit einem Vordruck von 4,5 barü durch Glattstrahldüsen mit einem Bohrungsdurchmesser von 150 μm senkrecht nach unten vertropft. Am Düsenkopf herrscht eine Gastemperatur von 14°C, die Fallhöhe beträgt ca. 20 Meter. Aus der Wirbelschicht am unteren Ende des Fallturmes wird kontinuierlich ein Produkt ausgetragen, welches sehr gut rieselfähig ist und ein Schüttgewicht von mindestens 790 kg/ m$^3$ aufweist. 72 Gew.-% des Granulates sind kleiner als 630 μm, nur 1 % ist kleiner als 200 μm.

Beispiel 4

In einer kontinuierlich betriebenen Anlage mit Luftkreislauf, deren sonstiger Aufbau derjenigen aus Beispiel 3 entspricht, in welcher man eine Aufstromgeschwindigkeit von 0,40 m/ s im Fallturm realisiert, wird eine NSA-Schmelze von 150°C mit einem Vordruck von 7,9 barü durch Glattstrahldüsen mit einem Bohrungsdurchmesser von 150 μm senkrecht nach unten vertropft. Bei einer Gaseintrittstemperatur von 10°C erhält man bei einem Taupunkt von 0°C ein Produkt, welches zu 80% kleiner als 630 μm ist und ferner keine Partikel kleiner als 200 μm beinhaltet. Bei sehr guter Rieselfähigkeit werden Schüttgewichte von mindestens 760 kg/ m$^3$ erreicht.

Beispiel 5

Nicotinamid, hergestellt nach Beispiel 4, wurde mit verschiedenen Zuschlagsstoffen oberflächenbehandelt.

Dazu wurde eine eingewogene Menge auf einem ERWEKA-Pelletierteller (40 cm Durchmesser) (Firma ERWEKA GmbH, 63130 Heusenstamm) mit Lösungen veschiedener Zuschlagstoffe besprüht und das Produkt anschließend im Wasserstrahlpumpenvakuum im Trockenschrank getrocknet. Die Mengen wurden so gewählt, daß die Konzentration des Zuschlagsstoffes 1 Gew.-% betrug (Tabelle 1).

Anschließend wurde eine Produktbeurteilung im Vergleich zu unbehandeltem Material durchgeführt.

Die Ergebnisse sind in Tabelle 2 und 3 zusammengestellt.

Beschreibung der Produktbeurteilungsverfahren

Schüttdichte: Gemessen im Meßzylinder

Schüttwinkel: Über einem Metallvollzylinder (h = 80 mm, D = 50 mm) wird in einem Abstand von 60 mm ein Metallsieb (1000 µm) befestigt. Auf das Sieb wird ca.
50 g NSA geschüttet und mit Hilfe einer Kunststoffspachtel von Hand langsam durch das Sieb gedrückt. Man passiert solange Pulver durch das Sieb, bis sich auf dem Zylinder ein geometrisch gleichmäßig geformter Schüttkegel ausgebildet hat. Die Höhe des Schüttkegels wird gemessen. Aus der Höhe des Schüttkegels (H[mm]) und dem Durchmesser des Metallzylinders kann der Winkel des geprüften Pulvers berechnet werden: Schüttkegelwinkel [°] = inv tan $\frac{H}{25}$
H = Schüttkegelhöhe [mm] = Gesamthöhe - 80 mm
Der Schüttwinkel simuliert zum Beispiel einen Schüttkegel in einem Silo. Je kleiner der Schüttwinkel, um so besser die Rieselfähigkeit.

Verklumpungsneigung: Test unter Klimastress: In einem Stahlzylinder (Durchmesser innen 50mm) werden 40 g NSA eingewogen, mit dem entsprechenden Kern (1,3 kg) verschlossen und mit einem 2 kg-Gewicht beschwert. Diesen Druckstempel stellt man 24 h lang in einen Klimaprüfschrank bei 40°C und 92 % rel. Feuchte. Anschließend wird an einem Druckprüfstand die Kraft gemessen, die nötig ist, um die erhaltene Tablette zu zerstören. Je niedriger der gemessene Wert,desto geringer ist die Verklumpungsneigung.
Test bei Raumtemperatur:
Druckstempel wie zuvor beschrieben, jedoch Lagerung auf dem Labortisch bei normaler Raumtemperatur und Normalfeuchte 12 Tage lang.

Visuelle Beurteilung/
Elektrostatische Aufladung: vergl. Tabelle 3

Beispiel 6

Zuschlagstoffe bei herkömmlichem Nicotinamid

Nicotinamid (kristallines Pulver) herkömmlicher Qualität (Degussa-Hüls) wurde mit verschiedenen Zuschlagstoffen oberflächenbehandelt, analog wie unter Beispiel 5 beschrieben.

Die Versuchsdurchführung ist in Tabelle 4, die Versuchsergebnisse sind in Tabelle 5 aufgeführt.

## Tabelle 1: Versuchsdurchführung

|  | Versuchs-Nr.: | Vorlage NSA [g] | Hilfsmittel | Sprühlösung: | DZ [upm] | Durchführung: |
|---|---|---|---|---|---|---|
| NSA Kugeln, unbehandelt | 1 | 400 | ohne | entfällt | entfällt | unbehandelt, Trocknung im Wasserstrahlpumpenvakuum über Nacht bei 30-40 °C |
| NSA Kugeln, mit 1 % ortho-Phosphorsäure | 2 | 400 | $H_3PO_4$, 85 %ig | 5,1 g pur | 190-250 | Glassprühgerät DESAGA mit Preßluft. Dauer 15 Min. Trocknung im Wasser-strahlpumpenvakuum über Nacht bei 30-40 °C |
| NSA Kugeln, mit 1 % Citronensäure | 3 | 400 | 4 g Citronensäure, $H_2O$-frei | 4 g Citronensäure, $H_2O$-frei, +70 mL Ethanol abs. (klare Lsg) | 250 | Preval-Sprayer. Dauer 45 Min. Trocknung im Wasserstrahl-pumpenvakuum über Nacht bei 30-40 °C |
| NSA Kugeln, mit 1 % Citronensäure-Monohydrat | 4 | 400 | 4,4 g Citronensäure * $H_2O$ | 4,4 g Citronensäure * $H_2O$ in 300 ml Diethylether (etwas trüb) | 250-300 | Glassprühgerät DESAGA mit Preßluft. Dauer 45 Min. Trocknung im Wasserstrahlpumpenvakuum über Nacht bei 30-40 °C |

DZ[upm] = Drehzahl Umdrehung pro Minute

**Tabelle 2: Ergebnisse zu Schüttdichte, Schüttwinkel und Verklumpungsneigung**

| | Versuchs-Nr.: | Schüttdichte [kg/m3] | Schüttwinkel [°] | Verklumpungsneigung, Test unter Klimastress (1) [kg] | Verklumpungsneigung, Test bei Raumtemperatur (2) [kg] |
|---|---|---|---|---|---|
| NSA herkömmlich, Degussa-Hüls, (Lot 36980) | entfällt | 609 | 39 | 7,2 | 4,0 |
| NSA Kugeln, unbehandelt | 1 | 801 | 20 | 1,2 | 0,6 |
| NSA Kugeln, mit 1 % ortho-Phosphorsäure | 2 | 764 | 26 | 2,3 | 0,5 |
| NSA Kugeln, mit 1 % Citronensäure | 3 | 763 | 28 | 2,4 | 1,6 |
| NSA Kugeln, mit 1 % Citronensäure-Monohydrat | 4 | 793 | 22 | 0,9 | 1,3 |

(1) = Druckstempel, 40 °C, 92 % rel. Feuchte, 24 Stunden

(2) = Druckstempel, Raumtemperatur, Normalfeuchte, 12 Tage

EP 1 108 465 A2

## Tabelle 3: Ergebnisse visuelle Beurteilung Rieselfähigkeit und elektrostatische Aufladung

| | Versuchs-Nr.: | **Rieselfähigkeit - Visuelle Beurteilung:** Gelagert für 2 Wochen bei RT in verschlossenem trocknem Glas | **Elektrostatische Aufladung - Visuelle Beurteilung:** 40 g Einwaage in PETG-Flasche, 500 ml |
|---|---|---|---|
| NSA Kugeln, unbehandelt | 1 | Kügelchen deutlich stärker zusammengelagert als bei Versuchsbeispiel Nr. 3 | Nach Schütteln, Haften einer Teilchenschicht an Gefäßwandung |
| NSA Kugeln, mit 1 % ortho-Phosphor-säure | 2 | **vollkommen rieselfähig** | kein Haften von Teilchen an der Gefäßwandung. **Keine elektrostatische Aufladung nachweisbar** |
| NSA Kugeln, mit 1 % Citronen-säure | 3 | Kügelchen etwas zusammengelagert, zerfallen sofort nach Bewegung | kein Haften von Teilchen an der Gefäßwandung. **Keine elektrostatische Aufladung nachweisbar** |
| NSA Kugeln, mit 1 % Citronen-säure-Monohydrat | 4 | **vollkommen rieselfähig** | Nach Schütteln, Haften einer Teilchenschicht an Gefäßwandung |

PETG = Polyethylenterephtalat-Copolyester

EP 1 108 465 A2

## Tabelle 4: Versuchsdurchführung

| | Versuchs-Nr.: | Vorlage NSA [g] | Hilfsmittel | Sprühlösung: | DZ [upm] | Durchführung: |
|---|---|---|---|---|---|---|
| NSA, herkömmlich, Degussa-Hüls, (Lot 29762) | 5 | 100 | ohne | entfällt | entfällt | unbehandelt, Trocknung im Wasserstrahlpumpenvakuum über Nacht bei 30-40 °C |
| NSA herkömmlich, mit 1 % ortho-Phosphorsäure | 6 | 200 | $H_3PO_4$, 85 %ig | 2,5 g pur | 190 | Glassprühgerät DESAGA mit Preßluft. Dauer 15 Min. Trocknung im Wasserstrahlpumpenvakuum über Nacht bei 30-40 °C |
| NSA herkömmlich, mit 1 % Citronensäure | 7 | 100 | Citronensäure, $H_2O$-frei | 1 g Citronensäure, $H_2O$-frei, +50 mL Ethanol abs. (klare Lsg) | 200-400 | Preval-Sprayer, langsames Aufsprühen. Dauer 120 Min. Trocknung im Wasserstrahlpumpenvakuum über Nacht bei 30-40 °C |

EP 1 108 465 A2

## Tabelle 5: Ergebnisse Verklumpungsneigung

| Ansatz | Versuchs-Nr.: | Verklumpungsneigung: Test unter Klimastress (1) [kg] | Schüttwinkel [°] |
|---|---|---|---|
| NSA, herkömmlich, Degussa-Hüls, (Lot 29762) | 5 | 5,0 | 33,0 |
| NSA herkömmlich, mit 1 % ortho-Phosphorsäure | 6 | 2,1 | 36,0 |
| NSA herkömmlich, mit 1 % Citronensäure | 7 | 2,2 | 37,0 |

(1) = Druckstempel, 40 °C, 92 % rel. Feuchte, 24 Stunden

EP 1 108 465 A2

1    NSA-Schmelze

2    Schmelzepumpe

3    Düsenvorrichtung

4    Wirbelschicht

5    Produktkühler

6    Sieb

7    Kreisgaskühler

8    Ventilator

9    Kreisgaseinspeisung

10   Kreisgasfilter

11   Kreisgaspurge

12   Grobkorn

13   Produkt

**Patentansprüche**

**1.**  Rieselfähige Nicotinsäureamid-haltige Formlinge mit kugelförmiger Ausbildung, einer Schüttdichte von > 750 kg/$m^3$, einer Korngrößen- verteilung von 50 bis 1000μm, einem Staubgehalt von < 0,5% und gegebenenfalls einem Gehalt an Zuschlagsstoff von 0,01 bis 5 Gew.-% und einem Nicotinsäureamidgehalt von mindestens 90 Gew.-%.

**2.**  Rieselfähige Nicotinsäureamid-haltige Formlinge nach Anspruch 1,
dadurch gekennzeichnet, daß als Zuschlagsstoffe ortho-Phosphorsäure, Citronensäure/Monohydrat, Magnesiumstearat, Palmitinsäure, Cellusoseacetat, Ethylcellulose, Methacrylatharz, Saccharose oder Dextrin einzeln oder deren Gemische verwendet werden.

**3.**  Rieselfähige Nicotinsäureamid-haltige Formlinge nach Anspruch 1,
dadurch gekennzeichnet, daß die Zuschlagsstoffe als Lösung, Suspension oder Schmelze mit einem Gehalt von 0,05 bis 5 Gew.-% auf die Produktoberfläche aufgesprüht werden.

**4.**  Verfahren zur Herstellung von rieselfähigen Nicotinsäureamid-haltigen Formlingen mit einer Korngrößenverteilung von 50 bis 1000μm und einem Wassergehalt von bis zu 5 Gew.-%,
dadurch gekennzeichnet,
daß man eine Schmelze von Nicotinsäureamid mit Temperaturen zwischen der Schmelztemperatur und 250°C in einem Fallturm vertropft und die schmelzförmigen Tropfen im direkten Wärmetausch mit Gas abkühlt, bis erstarrte Formlinge ausgetragen werden können.

**5.**  Verfahren nach Anspruch 4,
dadurch gekennzeichnet,
daß die Tropfenerzeugung im Fallturm durch laminaren Strahlzerfall oder Zerwellen des Schmelzestrahles erfolgt, wobei die Flüssigkeitsstrahlen durch Ausfluß aus Bohrungen mit einem Durchmesser zwischen 50 und 300μm unter einem Vordruck zwischen 0,1 und 20 bar erzeugt werden.

**6.**  Verfahren nach Anspruch 4,
dadurch gekennzeichnet,
daß man die Tropfen im Gleichstrom mit dem Gas abkühlt, bis erstarrtes Granulat am Boden des Fallturmes ausgetragen werden kann und hierbei ein Massenverhältnis Gas: Nicotinsäureamid von 20:1 bis 60:1 einstellt.

7.  Verfahren nach Anspruch 4,
    dadurch gekennzeichnet,
    daß man die Tropfen im Gegenstrom zum Gas abkühlt und am unteren Ende des Fallturmes in einer von demselben Gas fluidisierten Wirbelschicht aus denselben erzeugten Partikeln auffängt und hierbei ein Massenverhältnis Gas: Nicotinsäureamid von 40:1 bis 80:1 einstellt.

8.  Verfahren nach Anspruch 4,
    dadurch gekennzeichnet, daß man die Formlinge im Fallturm nach der Erstarrung weiter bis auf die Siliertemperatur abkühlt.

9.  Verfahren nach Anspruch 4,
    dadurch gekennzeichnet,
    daß man als Gas zur Kühlung Stickstoff verwendet.

Abbildung 1